# EUROPÄISCHE PATENTSCHRIFT

(11) **EP 3 279 756 B1**
(45) Veröffentlichungstag und Bekanntmachung des Hinweises auf die Patenterteilung: **10.07.2019**
(21) Anmeldenummer: 16182137.6
(22) Anmeldetag: 01.08.2016
(51) Int. Cl.: G01N 35/00, G05B 23/02

(54) **DIAGNOSEEINRICHTUNG UND VERFAHREN ZUR ÜBERWACHUNG DES BETRIEBS EINER TECHNISCHEN ANLAGE**
DIAGNOSTIC DEVICE AND METHOD FOR MONITORING THE OPERATION OF A TECHNICAL PLANT
DISPOSITIF DE DIAGNOSTIC ET PROCÉDÉ DE SURVEILLANCE DU FONCTIONNEMENT D'UNE INSTALLATION TECHNIQUE

(43) Veröffentlichungstag der Anmeldung: 07.02.2018
(73) Patentinhaber: Siemens Aktiengesellschaft, 80333 München (DE)
(72) Erfinder: Bierweiler, Thomas, 76131 Karlsruhe (DE); Labisch, Daniel, 76149 Karlsruhe (DE)

(56) Entgegenhaltungen:
- EP-A1- 2 472 440
- WO-A1-2013/155421
- WO-A2-02/056248

## Beschreibung

Die Erfindung betrifft eine Diagnoseeinrichtung zur Überwachung des Betriebs einer technischen Anlage mit einem Automatisierungssystem nach dem Oberbegriff des Anspruchs 1 sowie ein entsprechendes Diagnoseverfahren nach dem Oberbegriff des Anspruchs 10.

Wartung und Instandhaltung von automatisierungstechnischen Anlagen können verbessert werden, wenn die korrekte Funktion von Teilanlagen oder Komponenten überwacht wird. Bei nachlassender Funktionsfähigkeit kann gezielt an der richtigen Stelle der Anlage mit Maßnahmen zur Wartung, Instandhaltung oder Fehlerbeseitigung eingegriffen werden.

Aus dem Aufsatz "Monitoring of Complex Industrial Processes based on Self-Organising Maps and Watershed Transformations" von Christian W. Frey, Fraunhofer Institute IOSB, gefunden im Internet am 11.03.2016 unter der Adresse www.iosb.fraunhofer.de/servlet/is/22544/Paper_ICIT2012_Frey.p df?command=downloadContent&filename=Paper_ICIT2012_Frey.pdf, ist ein Diagnoseverfahren zur Überwachung komplexer industrieller Prozesse bekannt, in welchem eine selbstorganisierende Karte anhand von Prozessvariablen, das heißt anhand der erfassten Werte von Messgrößen und der an den Prozess ausgegebenen Werte der Stellgrößen, für ein fehlerfreies Verhalten des Prozesses trainiert wird. Als "selbstorganisierende Karten", Kohonenkarten oder Kohonennetze (nach Teuvo Kohonen; englisch self-organizing map, SOM bzw. self-organizing feature map, SOFM) bezeichnet man laut Wikipedia vom 04.03.2016 eine Art von künstlichen neuronalen Netzen. Sie sind als unüberwachtes Lernverfahren ein leistungsfähiges Werkzeug des Data-Mining. Ihr Funktionsprinzip beruht auf der biologischen Erkenntnis, dass viele Strukturen im Gehirn eine lineare oder planare Topologie aufweisen. Anhand der gemäß obigem Aufsatz vorbestimmten selbstorganisierenden Karte wird das spätere Betriebsverhalten mit dem erlernten fehlerfreien Verhalten verglichen. Auf diese Weise wird ein abweichendes Verhalten erkannt, das anschließend auf Ursachen und mögliche Fehler beim Betrieb des Prozesses analysiert werden kann.

Nachteilig bei dem bekannten Diagnoseverfahren ist jedoch, dass die auszuwertenden Prozessvariablen und deren aktuelle Werte durch Mithören der Feldbuskommunikation ermittelt werden, ohne dass dabei eine spezielle Auswahl der auszuwertenden Prozessvariablen erfolgt. In nachteiliger Weise können daher auch Prozessvariablen in die Auswertung zur Bestimmung einer Diagnoseaussage einbezogen werden, die für die Diagnose keinerlei Relevanz besitzen und daher die Diagnoseaussage verfälschen können.

Aus der EP 2 472 440 A1 ist ein Verfahren zur Zustandsdiagnose einer Prozessanlage bekannt, bei welchem durch Gruppieren historischer Prozessdaten in mehrere zeitbasierte Gruppen und mehrere räumliche Gruppen eine Reduktion der Größe einzelner selbstorganisierender Karten erreicht wird. Jede selbstorganisierende Karte entspricht einer Kombination aus einer der zeitbasierten Gruppen und einer der räumlichen Gruppen. Im Vergleich zu einer Nutzung einer einzigen Karte zur Zustandsdiagnose der Anlage werden mit Hilfe der beschriebenen Gruppierung mehrere, vorteilhaft kleinere selbstorganisierende Karten erhalten.

Der Erfindung liegt daher die Aufgabe zugrunde, eine Diagnoseeinrichtung und ein Diagnoseverfahren zur Überwachung des Betriebs einer technischen Anlage zu schaffen, die sich durch eine verbesserte Zuverlässigkeit der Diagnoseaussage auszeichnen.

Zur Lösung dieser Aufgabe weist die erfindungsgemäße Diagnoseeinrichtung die im kennzeichnenden Teil des Anspruchs 1 angegebenen Merkmale auf. In den abhängigen Ansprüchen sind Weiterbildungen der Erfindung, in Anspruch 10 ein Diagnoseverfahren, in Anspruch 11 ein Computerprogramm zur Durchführung des Diagnoseverfahrens und in Anspruch 12 ein entsprechendes Computerprogrammprodukt beschrieben.

Vorteilhaft ist das neue Diagnoseverfahren an vielfältigen verfahrens-, fertigungs- und prozesstechnischen Anlagen anwendbar, da technische Abläufe üblicherweise durch Schrittketten, die auch als Batch-Rezepte, Batch-Steuerungen, Ablaufketten oder Ablaufsteuerungen (Englisch: Sequential Function Chart, SFC) bezeichnet werden, gesteuert werden. Der Ablauf der einzelnen Schritte kann sowohl produktionsbedingten als auch durch Fehler bedingten Schwankungen unterliegen. Durch die Gewinnung einer Diagnoseaussage hoher Zuverlässigkeit werden die Sicherheit des Anlagenbetriebs und die Erfüllung qualitativer Ziele mittels der technischen Anlage hergestellter Produkte verbessert. Dabei werden ungewöhnliche Abweichungen von den normalen Schwankungen zuverlässig unterschieden.

Schrittketten werden durch ein Programm zur Steuerung des Betriebsablaufs, welches beispielsweise in einem Automatisierungsgerät abläuft, implementiert. In den Schritten der Schrittketten werden üblicherweise Stellgrößen gesetzt, durch welche in den auf der Anlage ablaufenden Prozess eingegriffen wird. Der Übergang zum nächsten Schritt einer Schrittkette erfolgt entweder rein zeitgesteuert oder, was dem Regelfall entspricht, bei Erreichen bestimmter Sollwerte durch eine oder mehrere Messgrößen. Hinter den Stellgrößen und den Messgrößen, die in dem Steuerungsprogramm zur Überprüfung von Übergangsbedingungen genutzt werden, verbirgt sich Prozesswissen, das beispielsweise von einem Verfahrenstechniker oder Chemieingenieur beim Engineering des Automatisierungssystems, insbesondere bei der Erstellung des Programms zur Steuerung des Ablaufs beim Betrieb der Anlage (SFC) eingebracht wurde. In besonders vorteilhafter Weise erfolgt nun die Auswahl der auszuwertenden Prozessvariablen auf der Basis der Stellgrößen und Übergangsbedingungen des SFC. Dazu wird mittels einer Auswerteeinrichtung der SFC, der als Ergebnis des Engineerings vorliegt, analysiert. Bei dieser Analyse werden die in der Schrittkette gesetzten Stellgrößen sowie die für die Transitionen abgefragten Messgrößen automatisch ermittelt. Das hat den Vorteil, dass nur die für die Prozessführung verwendeten Prozessvariablen in die Bestimmung einer Diagnoseaussage einbezogen werden, die für die Diagnose relevant sind. Die Aufgabe der Gewinnung einer zuverlässigen Diagnoseaussage wird durch die Verwendung einer oder mehrerer selbstorganisierender Karten generisch gelöst. Da die in die Diagnose einbezogenen Stell- und Messgrößen direkt von der Schrittkette gesteuert werden bzw. in dieser ausgewertet werden, ist sichergestellt, dass die überwachten Prozessvariablen sinnvoll zusammenhängen und damit für eine Diagnose aussagekräftig sind.

In dem Leitsystem SIMATIC PCS 7 sind SFCs an Continuous Function Charts (CFCs) gekoppelt. Ein CFC ist ein graphischer Editor, der auf dem Softwarepaket STEP 7 aufsetzt. Er dient dazu, aus vorgefertigten Bausteinen eine Gesamtsoftwarestruktur für eine Automatisierungslösung zu erstellen. Hierzu werden Bausteine auf Funktionspläne platziert, parametriert und verschaltet. Falls gewünscht, können die Ein- und Ausgangssignale der CFCs zusätzlich in die Diagnose einbezogen werden. Diese werden dann ebenfalls als für die Diagnose relevante Prozessvariablen bestimmt und analog zu den Prozessvariablen, die anhand des SFC bestimmt wurden, in Datensätze und selbstorganisierende Karte aufgenommen.

Die Erfindung hat weiterhin den Vorteil, dass sich die neuartige Diagnose durch hohe Flexibilität und leichte Anwendbarkeit auszeichnet. Dazu trägt bei, dass in einem automatischen Lernvorgang für jeden Knoten der selbstorganisierenden Karte, der einen fehlerfreien Durchlauf der Schrittkette repräsentiert, automatisch ein n-Tupel mit n Koordinaten bestimmt wird, wobei jede Koordinate für einen Wert einer Prozessvariablen, das heißt einer automatisch als für die Diagnose relevant bestimmten Stell- oder Messgröße, eines beim Einlernvorgang durchlaufenden Schrittes steht. Als Eingangsgrößen werden also beim Einlernen der selbstorganisierenden Karte die gesetzten Stellgrößen bzw. erfassten Messgrößen der einzelnen Schritte einer Schrittkette verwendet. Da die Prozessvariablen bei verschiedenen Durchläufen variieren können, selbst wenn kein Fehler auftritt, werden zum Einlernen der selbstorganisierenden Karte Werte der Prozessvariablen mehrerer gut verlaufener Durchläufe der Schrittketten als Trainingsdaten genutzt. Die selbstorganisierende Karte speichert beim Einlernen an jedem Knoten typische Werte der Prozessvariablen für die einzelnen Schritte als Gut-Werte ab. Zu Beginn des Einlernverfahrens kann beispielsweise eine Karte der Größe 8 x 12 Knoten verwendet werden. Selbstverständlich sind auch davon abweichende Größen verwendbar. Nach dem Einlernen können die Trainingsdaten zur Überprüfung der Kartengröße genutzt werden. Ist die Karte zu groß, so werden die einzelnen Knoten der Karte nicht oder nur einmal von den Trainingsdaten getroffen. Wenn sich eine Karte als zu groß erwiesen hatte, kann in einem nächsten Einlernvorgang eine etwas kleinere Kartengröße gewählt und der Einlernvorgang erneut gestartet werden. Die neue Art der Diagnose erfordert somit in vorteilhafter Weise kaum Kenntnisse des Bedieners über die zu überwachende Anlage und ist praktisch universell anwendbar. Weichen im Diagnosebetrieb bei einzelnen Schritten eines zu prüfenden Durchlaufs Werte der Prozessvariablen von den an den Knoten der zuvor eingelernten selbstorganisierenden Karte abgespeicherten Gut-Werten zu sehr ab, so stellt dies ein Indiz für einen Fehler in der überwachten Anlage dar. Erst für die sich anschließende Analyse der Fehlerursache werden eventuell genauere Kenntnisse über den jeweils auf der überwachten Anlage ablaufenden Prozess benötigt.

In vorteilhafter Weise kann eine exaktere Abbildung des Gutverhaltens erreicht werden, wenn für jeden einzelnen Schritt der Schrittkette jeweils eine eigene selbstorganisierende Karte mit Trainingsdaten erstellt und abgelegt wird. Die einzelnen Datensätze der Knoten enthalten dabei, wie zuvor beschrieben, Werte aller automatisch aus dem Engineering ermittelten, für die Diagnose relevanten Prozessvariablen. Dadurch kann die Zuverlässigkeit der Diagnoseaussage weiter erhöht werden.

Für den zuvor beschriebenen Fall einer selbstorganisierenden Karte für jeden Schritt kann in vorteilhafter Weise eine Reduktion der Datenmenge über eine an den jeweiligen Schritt angepasste Variation der Dimension der Datensätze erreicht werden. Dazu werden nur die in dem jeweiligen Schritt gesetzten Stellgrößen und/oder die Messgrößen, die in dem jeweiligen Schritt zur Überprüfung einer Übergangsbedingung abgefragt werden, automatisch als für die Diagnose in dem jeweiligen Schritt relevante Prozessvariablen bestimmt. Aufgrund der damit verringerten Datenmenge reduziert sich der Bedarf an Rechenleistung und die zur Bestimmung der Diagnoseaussage durchgeführte Auswertung der Daten wird beschleunigt.

Durch Auswertung eines Datensatzes mit den Werten der Prozessvariablen jedes Schritts für einen zu prüfenden Durchlauf anhand der selbstorganisierenden Karte werden Abweichungen des Anlagenverhaltens beim zu prüfenden Durchlauf von zuvor erlernten und in der vorbestimmten selbstorganisierenden Karte abgelegten Werten fehlerfreier Durchläufe detektiert und angezeigt. Vorzugsweise wird zur Detektion einer Abweichung des Anlagenverhaltens der geringste kartesische Abstand zwischen dem Datensatz des zu prüfenden Durchlaufs und den Knoten der selbstorganisierenden Karte bestimmt. Derjenige Knoten der Karte, welcher den geringsten kartesischen Abstand zum Datensatz des zu prüfenden Durchlaufs aufweist, wird als Gewinnerknoten ermittelt.

Gemäß einer besonders vorteilhaften Ausführungsform der Erfindung wird als Diagnoseaussage eine Abweichung vom Normalverhalten bei dem zu prüfenden Durchlauf der Schrittkette dann angezeigt, wenn der Abstand zum Gewinnerknoten einen vorbestimmten Schwellwert übersteigt. Ebenso wie das Erlernen der Knoten der selbstorganisierenden Karte können die Schwellwerte anhand der Datensätze fehlerfreier Durchläufe automatisch ermittelt werden. Dazu können mit den Datensätzen die jeweiligen Gewinnerknoten ermittelt und die jeweiligen kartesischen Abstände zwischen den Datensätzen und den zugehörigen Gewinnerknoten bestimmt werden. Als Schwellwert kann dann der sich jeweils zu einem Datensatz ergebende Abstand zu seinem Gewinnerknoten, zur Vermeidung von Fehldiagnosen jeweils erhöht um einen Sicherheitsaufschlag von beispielsweise 5 bis 50%, vorzugsweise 15%, berechnet und auf diese Weise vorbestimmt werden.

Prinzipiell könnte die Vorbestimmung der Knoten der selbstorganisierenden Karte auf beliebige Weise, beispielsweise durch manuelle Eingabe der Werte der Prozessvariablen durch einen Bediener, erfolgen. Mit Vorteil kann jedoch zur Vorbestimmung der selbstorganisierenden Karte ein einfach durchzuführendes Lernverfahren angewendet werden, welche keine komplizierten Eingaben eines Bedieners und kaum Kenntnisse über den Betrieb der Anlage erfordert. Dazu werden vor einem zu prüfenden Durchlauf im Datenspeicher mehrere, einen fehlerfreien Betrieb der Anlage kennzeichnende Datensätze abgespeichert und anhand dieser Datensätze durch das Lernverfahren die n-Tupel mit den Werten der Prozessvariablen für fehlerfreie Durchläufe für die Knoten der Karte berechnet und an diesen abgelegt, das heißt den Knoten zugeordnet abgespeichert. Die auf diese Weise vorbestimmte Karte kann unmittelbar zur Auswertung eines zu prüfenden Durchlaufs verwendet werden. Selbstverständlich können durch einen Bediener aber auch nachträglich noch Korrekturen an den einzelnen Daten der Karte vorgenommen werden. Darüber hinaus kann dem Bediener beim Einrichten der Diagnosefunktion zusätzlich eine Maske angeboten werden, mit deren Hilfe weitere, nach seiner Auffassung ebenfalls für die Diagnose relevante Prozessvariablen als zusätzliche Koordinate den Datensätzen hinzugefügt oder aus diesen entfernt werden können.

Die Diagnoseeinrichtung kann in einer Automatisierungsumgebung vorteilhaft als Software-Funktionsbaustein ausgebildet werden, der in einer grafischen Bedienoberfläche eines Engineering-Systems mit Funktionsbausteinen von Automatisierungsprogrammen verschaltbar und zum Betrieb der Diagnoseeinrichtung beispielsweise in ein Automatisierungsgerät ladbar ist. Auf einem so genannten Faceplate zur Realisierung einer Mensch-Maschine-Schnittstelle auf einem Bedien- und Beobachtungsgerät der automatisierungstechnischen Anlage werden dann erkannte Abweichungen von Prozessvariablen einzelner Schritte, die auf einen Fehler in der Anlage hindeuten, zur Anzeige gebracht. Auf diesem Bedien- und Beobachtungssystem können durch einen Bediener, falls gewünscht, Änderungen an der selbstorganisierenden Karte oder an den Schwellwerten, die den einzelnen Knoten quasi als Abweichungssensitivität zugeordnet sind, vorgenommen werden.
In besonders vorteilhafter Weise kann die neue Diagnoseeinrichtung zur Überwachung des Betriebs einer technischen Anlage, insbesondere der Datenspeicher und die Auswerteeinrichtung, in einer Software-Umgebung zur Cloud-basierten Anlagenüberwachung implementiert werden. Eine derartige Software-Umgebung stellt beispielsweise der datenbasierte Remote-Service "Control Performance Analytics" der Siemens AG dar. Daten aus Kundenanlagen werden mit Hilfe von Software-Agenten gesammelt, aggregiert, und an ein Siemens-Service-Operation-Center geschickt, in welchem sie auf einem Remote-Service-Rechner abgespeichert werden. Dort werden sie mit Hilfe von verschiedenen "Data Analytics"-Software-Applikationen halbautomatisch ausgewertet. Bei Bedarf können für den Remote-Service besonders geschulte Experten auf dieser Datenbasis hocheffizient arbeiten. Die Ergebnisse der Datenanalyse können auf einem Monitor des Remote-Service-Rechners angezeigt und/oder auf einem Sharepoint bereitgestellt werden, so dass sie vom Endkunden, das heißt dem Bediener der technischen Anlage, zum Beispiel in einem Browser betrachtet werden können.

Das Diagnoseverfahren wird somit bevorzugt in Software oder in einer Kombination Soft-/Hardware implementiert, so dass die Erfindung auch ein Computerprogramm mit durch einen Computer ausführbaren Programmcodeanweisungen zur Implementierung des Diagnoseverfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm kann, wie oben beschrieben, in einem Speicher eines Automatisierungsgeräts vorgehalten oder in diesen geladen werden, so dass beim Betrieb des Automatisierungsgeräts die Überwachung des Betriebs der technischen Anlage automatisch durchgeführt wird, oder das Computerprogramm kann bei einer Cloud-basierten Überwachung einer technischen Anlage in einem Speicher eines Remote-Service-Rechners vorgehalten oder in diesen ladbar sein.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen
- Figur 1: ein Beispiel für eine technische Anlage,
- Figur 2: einen Ausschnitt eines R&I-Fließschemas der Anlage,
- Figur 3: einen Ausschnitt aus einem SFC und
- Figur 4: ein Ergebnisdiagramm der Auswertung verschiedener geprüfter Durchläufe.

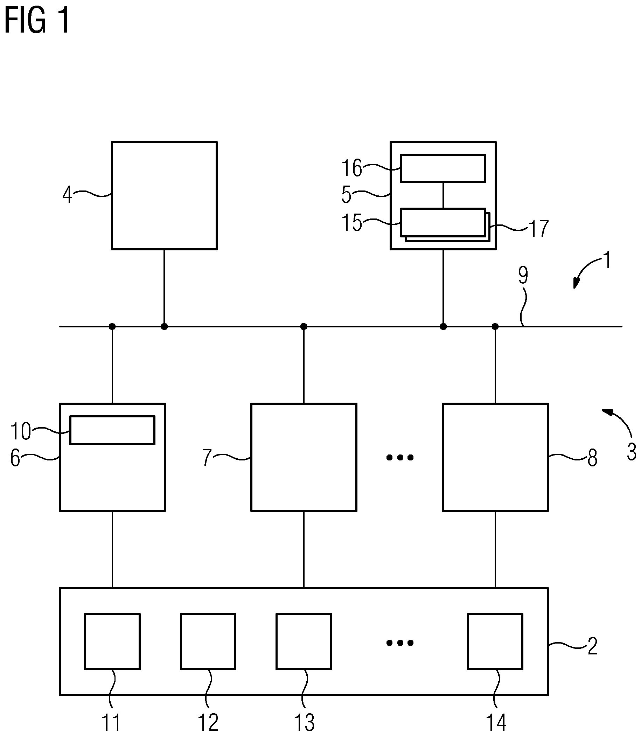

Figur 1 zeigt in vereinfachter schematischer Darstellung als Beispiel eine prozesstechnische Anlage 1, in der ein Prozess 2 mittels eines Automatisierungssystems 3 gesteuert wird. Das Automatisierungssystem 3 enthält ein Planungs- und Engineering-Werkzeug 4, ein Bedien- und Beobachtungsgerät 5 und eine Vielzahl von Automatisierungsgeräten 6, 7, 8, die über ein Bussystem 9 zur Datenkommunikation miteinander verbunden sind. Die Automatisierungsgeräte 6, 7, 8 steuern den technischen Prozess 2 nach Maßgabe von Automatisierungsprogrammen, von welchen beispielhaft in Figur 1 ein Automatisierungsprogramm 10 eingezeichnet ist. Das Automatisierungsprogramm 10 beispielsweise besteht meist aus mehreren Funktionsbausteinen, welche mit weiteren, im Automatisierungssystem 3 verteilten Funktionsbausteinen in Wechselwirkung stehen können, sowie eine Ablaufsteuerung. Die Ablaufsteuerung realisiert eine Steuerung mit zwangsläufig schrittweisem Ablauf, die von einem Schritt auf den folgenden Schritt, abhängig von Bedingungen, nach Art einer Schrittkette weiterschaltet. Durch Ablaufeigenschaften der verschiedenen Funktionsbausteine wird festgelegt, wie sich die einzelnen Bausteine innerhalb der gesamten Struktur des Automatisierungssystems in die zeitliche Abfolge der Bearbeitung einfügen.

Zur Steuerung des Prozesses 2 werden vielfältige Feldgeräte 11, 12, 13, 14 zur Prozessinstrumentierung eingesetzt. Messumformer dienen zur Erfassung von Messgrößen als Prozessvariablen, wie beispielsweise Temperatur, Druck, Durchflussmenge, Füllstand, Dichte oder Gaskonzentration eines Mediums. Durch Ausgabe von Stellgrößen an Stellglieder kann der Prozessablauf in Abhängigkeit von erfassten Prozessvariablen, beispielsweise den Vorgaben des Automatisierungsprogramms 10 entsprechend, beeinflusst werden. Als Beispiele für Stellglieder seien ein Regelventil, eine Heizung oder eine Pumpe genannt.

In der technischen Anlage 1 werden technische Abläufe, wie bereits oben angedeutet, durch Schrittketten, die auch als Ablaufketten bezeichnet werden können, gesteuert. Eine Schrittkette stellt eine Ablauffolge von Verarbeitungs- oder Produktionsschritten dar, die durch ein Programm zur Steuerung des Betriebsablaufs festgelegt sind. Die Werte von Prozessvariablen bei der Ausführung der einzelnen Schritte können sowohl produktionsbedingten als auch durch Fehler bedingten Schwankungen unterliegen. Die Überwachung der Schritte ist daher hilfreich zur Erkennung von Abweichungen und Fehlerfällen. Zur Überwachung des Betriebs der Anlage 1 wird eine Vielzahl von Datensätzen, die für den Betrieb der Anlage kennzeichnend sind, erfasst und in einem Datenspeicher 15 abgespeichert. Es sind jedoch nicht alle Prozessvariablen, die in der technischen Anlage verwendet werden, hilfreich bei der Bestimmung einer zuverlässigen Diagnoseaussage. Zur automatischen Bestimmung der für die Diagnose relevanten Prozessvariablen wird mittels einer Auswerteeinrichtung 16 ein Programm 17 zur Steuerung des Ablaufs beim Betrieb der Anlage 1 analysiert. Das Programm 17 kann beispielsweise den Quellcode der Gesamtheit der in den Automatisierungsgeräten 6, 7, 8 vorhandenen Ablaufsteuerungen entsprechen. Bei der Analyse des Programms 17 wird insbesondere ermittelt, welche Stellgrößen in Schritten der Schrittketten gesetzt und/oder welche Messgrößen in Schritten der Schrittkette zur Überprüfung einer Übergangsbedingung abgefragt werden. Den so ermittelten Prozessvariablen wird jeweils eine Koordinate in den n-Tupeln, welche die Datensätze bilden, zugeordnet. Weiterhin können mittels der Auswerteeinrichtung 16 automatisch Ein- und Ausgangsgrößen beispielsweise von Funktionsbausteinen bestimmt werden, die für den auf der Anlage 1 ablaufenden Prozess 2 ebenfalls von Bedeutung sind und auf entsprechende Weise in die Diagnose einbezogen werden. Mittels der Auswerteeinrichtung 16 werden zunächst Datensätze von mehreren Gutdurchläufen der Schrittkette ausgewertet und dabei eine selbstorganisierende Karte trainiert. Auf diese Weise werden an den Knoten der selbstorganisierenden Karte entsprechende n-Tupel mit vorbestimmten Werten von Prozessvariablen für fehlerfreie Durchläufe der Schrittkette erhalten. Die so vorbestimmte selbstorganisierende Karte wird im späteren Betrieb der Anlage 1 dazu verwendet, eine Diagnoseaussage über den Betrieb der Anlage 1 zu bestimmen. Dabei werden mittels der Auswerteeinrichtung 16 Datensätze, die Werte von Prozessgrößen zur jeweiligen Ausführungszeit einzelner Schritte von Schrittketten enthalten, ausgewertet. Die Diagnoseaussage kann beispielsweise in einer Logdatei archiviert und/oder einem Bediener zur Anzeige gebracht werden, damit eventuell geeignete Maßnahmen zur Fehlerbehandlung getroffen werden können.

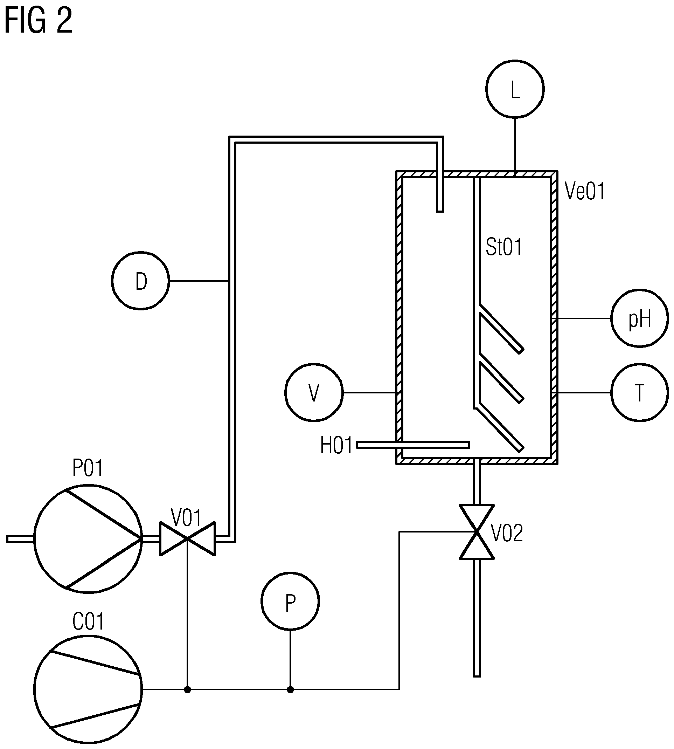

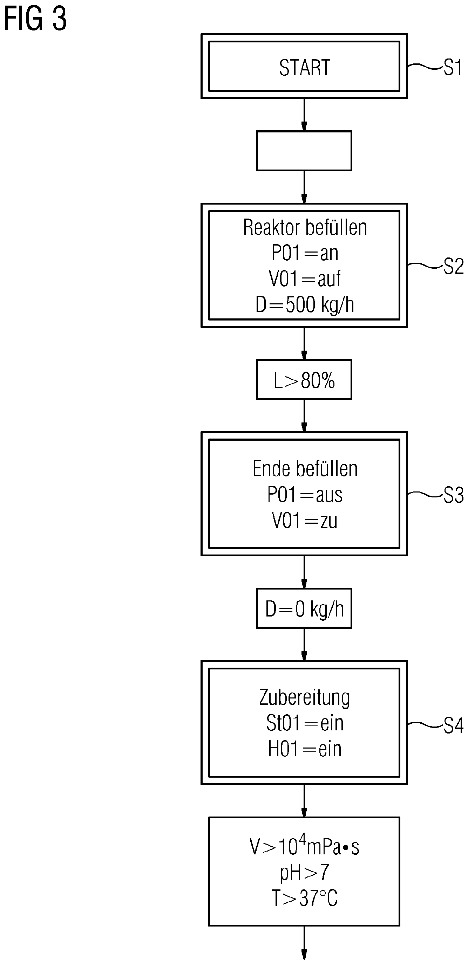

Die mit der Diagnose erreichten Vorteile werden an dem anhand der Figuren 2 und 3 im Folgenden erläuterten konkreten Ausführungsbeispiel besonders deutlich. Figur 2 zeigt einen Ausschnitt eines R&I-Fließschemas einer einfachen Anlage. Ein Behälter VE01, beispielsweise ein Bioreaktor, ist über eine Pumpe P01 und ein Stellventil V01 befüllbar. Über ein zweites Stellventil V02 kann ein fertiges Endprodukt oder ein Zwischenprodukt aus dem Behälter VE01 entnommen werden. Die beiden Stellventile V01 und V02 sind als pneumatische Regelventile ausgeführt und benötigen zu ihrem Betrieb Druckluft, zu deren Erzeugung ein Kompressor C01 vorgesehen ist. Zur besseren Verständlichkeit sind im Folgenden Messumformer, die in der Anlage zur Erfassung einer physikalischen Größe als Prozessvariable verbaut sind, mit einem Bezugszeichen gekennzeichnet, welches der jeweiligen physikalischen Größe entspricht. Beispielsweise wird mittels des Messumformers D in Figur 2 die Durchflussgeschwindigkeit D im Zuleitungsrohr gemessen, welches der Behälterbefüllung dient.

Figur 3 zeigt einen Ausschnitt einer Schrittkette, welche den Betrieb des in Figur 2 verdeutlichten Anlagenteils steuert. Die Schrittkette beginnt mit einem Schritt S1, der mit der Beschriftung "START" versehen ist. In einem Schritt S2 mit der Beschriftung "Reaktor befüllen" wird entsprechend der Beschriftung "P01=an" die Pumpe P01 eingeschaltet, entsprechend der Beschriftung "V01=auf" das Stellventil V01 geöffnet und entsprechend der Beschriftung "D=500 kg/h" der Durchfluss D im Zuleitungsrohr auf 500 Kilogramm pro Stunde geregelt. Der Schritt S2 wird so lange ausgeführt, bis eine Übergangsbedingung erfüllt ist. Als Übergangsbedingung wird entsprechend der Beschriftung "L>80 %" gewartet, bis der Füllstand L des Behälters VE01 80% seiner maximalen Höhe erreicht hat. Durch Analyse des Schritts S2 mittels der Auswerteeinrichtung (16 in Figur 1) werden somit die Prozessvariablen Istwert der Pumpe P01, Stellung des Stellventils V01, welche im Schritt S2 gesetzte Stellgrößen darstellen, sowie der gemessene Durchfluss D und der Füllstand L, also Messgrößen, die zur Durchflussregelung bzw. zur Überwachung des Erreichens eines vorgegebenen Schwellwerts genutzt werden, als für die Diagnose relevante Prozessvariablen automatisch bestimmt. Im nächsten Schritt S3 mit der Beschriftung "Ende befüllen" werden die Pumpe P01 entsprechend der Beschriftung "P0.1=aus" ausgeschaltet und das Stellventil V01 entsprechend der Beschriftung "V01=zu" geschlossen. Als Übergangsbedingung wird gewartet, bis entsprechend der Beschriftung "D=0 kg/h" am Durchflussmessumformer D kein Durchfluss mehr gemessen wird. Als für die Diagnose relevante Prozessvariablen werden somit der Istwert der Pumpe P01, der Stellwert des Stellventils V01 und der gemessene Durchfluss D automatisch bestimmt. Im darauf folgenden Schritt S4 mit der Beschriftung "Zubereitung" werden entsprechend der Beschriftung "St01=ein" ein Rührer St01 und entsprechend der Beschriftung "H01=ein" eine Heizung H01 eingeschaltet, mit welchen der Behälter VE01 gemäß Figur 2 ausgestattet ist. Als Übergangsbedingungen werden das Erreichen einer dynamischen Viskosität V von 10⁴ mPa·s, Beschriftung in Figur 3: "V>10⁴ mP·s", eines pH-Werts > 7, Beschriftung "pH>7", und einer Temperatur von mehr als 37 °C, Beschriftung "T>37 °C", angegeben. Anhand des Schrittes S4 werden daher als für die Diagnose relevante Prozessvariablen die Istwerte des Rührers St01 und der Heizung H01, die gemessene Viskosität V, der pH-Wert und die Temperatur T automatisch bestimmt.

Die Überwachung der automatisch als für die Diagnose relevant bestimmten Prozessvariablen kann bei der Ausführung einzelner Schritte beispielsweise des in Figur 3 gezeigten Ausschnitts einer Schrittkette oder anhand eines vollständigen Durchlaufs einer Schrittkette nun anhand einer selbstorganisierenden Karte für jeden Schritt bzw. anhand einer selbstorganisierenden Karte für die gesamte Schrittkette generisch gelöst werden. Als Datensätze, die den Betrieb der Anlage kennzeichnen, werden die Werte der Prozessvariablen bei der Ausführung einzelner Schritte für einen Durchlauf der Schrittkette verwendet. Zum Einlernen der selbstorganisierenden Karten werden die Werte mehrerer gut verlaufender Durchläufe der Schrittkette als Trainingsdaten genutzt. Nach dem Einlernen wird zumindest eine selbstorganisierende Karte erhalten, die an jedem Knoten Datensätze in Form von n-Tupeln aufweist, wobei jede Koordinate des n-Tupels für Werte von Prozessvariablen eines Schritts bei fehlerfreiem Durchlauf steht. Für den Start des Einlernverfahrens kann beispielsweise eine Karte der Größe 8 x 12 Knoten verwendet werden. Nach dem Einlernen können die Trainingsdaten zur Überprüfung der Kartengröße genutzt werden. Ist die Karte zu groß, so werden manche Knoten der Karte nicht oder nur einmal von den Trainingsdaten getroffen. Wenn die Karte zu groß ist, wird für das weitere Lernverfahren eine etwas kleinere Kartengröße gewählt und diese Karte erneut anhand der Trainingsdaten eingelernt. In einem weiteren Schritt werden Schwellwerte, die zur Detektion einer Abweichung vom Normalverhalten bei einem zu prüfenden Durchlauf der Schrittkette genutzt werden, automatisch anhand einer Auswertung von Datensätzen für fehlerfreie Durchläufe abgeleitet. Dazu werden mit den Datensätzen die jeweiligen Gewinnerknoten ermittelt und die maximalen kartesischen Abstände zu diesen bestimmt. Als Schwellwert wird dann der maximale Abstand um einen Sicherheitsaufschlag erhöht, der beispielsweise zwischen 5 und 50%, vorzugsweise 15%, betragen kann. Bei Überschreiten eines derartigen Schwellwerts im späteren Betrieb der Anlage wird die Diagnoseaussage erhalten, dass eine Abweichung des Datensatzes für einen zu prüfenden Durchlauf von der erlernten selbstorganisierenden Karte vorliegt, welche möglicherweise auf einen Fehler in der Anlage deutet.

Während des Betriebs der Anlage 1 in Figur 1 werden zu seiner Überwachung zu prüfende Durchläufe von Schrittketten anhand der mindestens einen zuvor eingelernten selbstorganisierenden Karte ausgewertet. Für jeden zu prüfenden Durchlauf werden die Werte der Prozessvariablen bei der Ausführung der einzelnen Schritte erfasst, im Datenspeicher 15 hinterlegt und mittels der Auswerteeinrichtung 16 ausgewertet. Bei der Auswertung wird derjenige Knoten der mindestens einen selbstorganisierenden Karte bestimmt, welcher den kleinsten kartesischen Abstand zum Datensatz des jeweils zu prüfenden Durchlaufs aufweist. Der Abstand wird mit einem vorbestimmten Schwellwert verglichen, welcher dem jeweiligen Knoten zugeordnet ist. Wird der Schwellwert überschritten, so liegt eine Abweichung vom Normalverhalten des Anlagenbetriebs vor, deren Ursache ein Anlagenfehler sein kann. Beispielsweise auf dem Bedien- und Beobachtungsgerät 5 wird dies als Diagnoseaussage angezeigt, so dass ein Bediener eine weitere Diagnose veranlassen oder geeignete Wartungsmaßnahmen ergreifen kann.

Bei Verwendung jeweils einer selbstorganisierenden Karte für jeden Schritt kann durch Vergleich der Werte der Prozessvariablen, die als relevant für die Diagnose in dem jeweiligen Schritt automatisch bestimmt wurden, für jeden Schritt eines zu prüfenden Durchlaufs mit den als Koordinaten des n-Tupels an den Knoten der jeweiligen selbstorganisierenden Karte hinterlegten Werten fehlerfreier Durchläufe ermittelt werden, welche Einzelschritte besonders abgewichen sind und welche für die Diagnose relevanten Prozessvariablen die Abweichung verursacht haben. Auch hierüber kann ein Anlagenbediener oder Wartungspersonal mit Hilfe eines Alarms oder einer geeigneten graphischen Darstellung informiert werden.

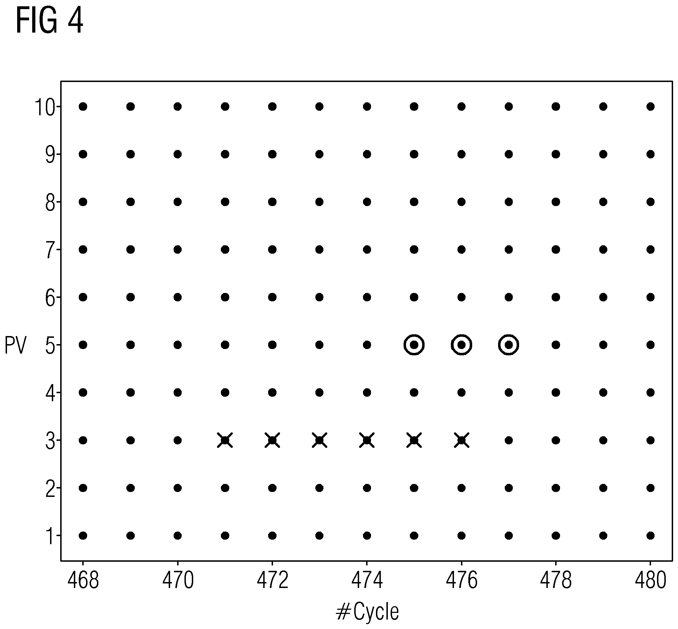

Figur 4 zeigt ein Beispiel einer Darstellung, in welcher einem Bediener Ergebnisse einer Überwachung des Betriebs einer technischen Anlage präsentiert werden können. Aufeinander folgend wurden 13 Durchläufe einer Schrittkette überprüft. Die Nummer des jeweils geprüften Durchlaufs ist auf der Abszisse, welche mit "#Cycle" beschriftet ist, aufgetragen. Die Ordinate, beschriftet mit "PV" trägt die Nummer der Prozessvariable, die als für die Diagnose relevant bestimmt und in die Auswertung aufgenommen wurde. In einer praktischen Anwendung kann die Nummer der Koordinate entsprechen, die der jeweiligen Prozessvariable in den Datensätzen zugeordnet ist. Durch einen im Diagramm eingezeichneten Punkt wird angezeigt, dass die Werte der jeweiligen Prozessvariable keine unzulässigen Abweichungen von einem fehlerfreien Durchlauf aufweisen. Ein Kreuz, als "X" eingezeichnet, steht für eine Schwellwertüberschreitung der jeweiligen Variable in einem Schrittkettendurchlauf, ein Kreis für eine Unterschreitung des jeweils vorbestimmten Schwellwerts. Für einen Bediener ist aufgrund der Unterstützung durch die beschriebene Diagnose nun leicht erkennbar, dass lediglich bei den Durchläufen mit den Nummern 468 bis 470 und 478 bis 480 keinerlei Verletzung der vorbestimmten Schwellwerte stattgefunden hat. Diese Durchläufe entsprechen also weitgehend dem Normalzustand. Dagegen sind bei den Durchläufen mit den Nummern 471 bis 476 Schwellwertüberschreitungen bei der Prozessvariablen mit der Nummer 3 und bei den Durchläufen mit den Nummern 475 bis 477 Unterschreitungen eines unteren Schwellwerts durch Werte der Prozessvariablen mit der Nummer 5 aufgetreten. Aufgrund dieser Hinweise kann der Bediener nun eine weitergehende Diagnose einleiten, um die Fehlerursache genauer zu detektieren.

In dem konkreten Beispiel einer technischen Anlage mit dem R&I-Fließschema-Ausschnitt gemäß Figur 2 ist zusätzlich ein Kompressor C01 mit einem in der Figur nicht dargestellten Vorratsbehälter für Druckluft verbaut. Ein Druck P der Druckluft wird durch einen Messumformer P überwacht. Die Druckluft wird als Hilfsenergie für die Stellventile V01 und V02 benötigt, da deren pneumatische Antriebe mit Druckluft betrieben werden. Werte der Leistungsaufnahme des Kompressors C01 und des Drucks P in den Druckluftleitungen werden zur Realisierung einer Druckregelung gemeinsam mit den Werten der bereits oben erwähnten Prozessvariablen beispielsweise über einen Feldbus übertragen. Der Kompressor C01 springt sporadisch an, wenn der Druck P einen Wert von 6 bar unterschreitet. Dabei steigt die Leistungsaufnahme des Kompressors C01 an und der Druck P wird wieder angehoben. Diese beiden Prozessvariablen sind jedoch weitgehend unabhängig von den übrigen und nicht relevant für die Produktion des im Behälter St01 hergestellten Produkts. Sie werden daher nicht als relevant für die Diagnose bestimmt und von der Auswertung zur Bestimmung einer Diagnoseaussage in vorteilhafter Weise ausgeschlossen. Würden dagegen, wie im oben genannten Aufsatz von Frey beschrieben, alle über den Feldbus übertragenen Werte von Prozessvariablen zur Auswertung verwendet, so könnte es durch die Verwendung der nicht relevanten Prozessvariablen Leistungsaufnahme des Kompressors C01 und Druck P möglicherweise zu einer falschen Diagnoseaussage kommen. Ein solcher Effekt wird mit der vorliegenden Diagnose vorteilhaft vermieden und somit die Zuverlässigkeit der Diagnoseaussagen erhöht.

Im Folgenden werden die durch die neue Diagnose erzielten Vorteile noch einmal kurz zusammengefasst:
Ein in der Praxis gewichtiger Vorteil liegt in der weitgehenden Automatisierbarkeit der Diagnosedurchführung. Kausal zusammenhängende Prozessvariablen können voll automatisierbar aus Engineering-Informationen eines Leitsystems durch Programmanalyse ermittelt werden. Eine oder mehrere selbstorganisierende Karten werden mit Hilfe von Archivdaten eingelernt und dimensioniert. Während des Betriebs der Anlage können Durchläufe von Schrittketten automatisch überwacht werden. Abweichungen werden frühzeitig erkannt und können dem Anlagenbedienpersonal mitgeteilt werden. Durch die weitgehende Automatisierbarkeit der Diagnose kann diese auch in Cloud-basierten Anwendungen gut zum Einsatz kommen.

Darüber hinaus können selbst Abweichungen detektiert werden, die bisher aufgrund der Komplexität der Anlage von einem Benutzer nicht ohne weiteres erkannt werden konnten.

Des Weiteren können Fehlersymptome, das heißt in unzulässiger Weise vom Normalzustand abweichende Werte der Stell- und Messgrößen, detektiert und dargestellt werden. Dies hilft dem Bedienpersonal der Anlage bei der Ursachenfindung und kann als Grundlage für eine weitergehende automatisierte Diagnose der Ursache dienen.

## Patentansprüche

1. Diagnoseeinrichtung zur Überwachung des Betriebs einer technischen Anlage (1), wobei die Anlage (1) ein Automatisierungssystem (3) aufweist, wobei die Diagnoseeinrichtung einen Datenspeicher (15), in welchem zumindest ein den Betrieb der Anlage (1) kennzeichnender Datensatz mit Werten von Prozessvariablen abspeicherbar ist, und eine Auswerteeinrichtung (16) umfasst, durch welche anhand des Datensatzes und zumindest einer vorbestimmten, so genannten selbstorganisierenden Karte eine Diagnoseaussage über den Betrieb der Anlage (1) bestimmbar und/oder anzeigbar ist, wobei die Auswerteeinrichtung (16) dazu ausgebildet ist, anhand eines Programms (17) zur Steuerung des Ablaufs beim Betrieb der Anlage (1) mit wiederholt durchlaufenen Schrittketten zumindest einen Teil der Prozessvariablen als für die Diagnose relevante Prozessvariablen automatisch zu bestimmen und diesen jeweils eine Koordinate des Datensatzes zuzuordnen, wobei der Datensatz als n-Tupel mit einer Anzahl n von Koordinaten ausgeführt ist, **dadurch gekennzeichnet, dass** die Auswerteeinrichtung (16) dazu ausgebildet ist, die in Schritten der Schrittkette gesetzten Stellgrößen und/oder die Messgrößen, die in Schritten der Schrittkette zur Überprüfung einer Übergangsbedingung abgefragt werden, als für die Diagnose relevante Prozessvariablen zu bestimmen.

2. Diagnoseeinrichtung nach Anspruch 1, **dadurch gekennzeichnet, dass** die Auswerteeinrichtung (16) dazu ausgebildet ist, zur Bestimmung und/oder Anzeige der Diagnoseaussage für Schritte der Schrittkette jeweils einen Datensatz und eine vorbestimmte selbstorganisierende Karte zu verwenden.

3. Diagnoseeinrichtung nach Anspruch 2, **dadurch gekennzeichnet, dass** die Auswerteeinrichtung (16) dazu ausgebildet ist, die in dem jeweiligen Schritt gesetzten Stellgrößen und/oder die Messgrößen, die in dem jeweiligen Schritt zur Überprüfung einer Übergangsbedingung abgefragt werden, automatisch als für die Diagnose in dem jeweiligen Schritt relevante Prozessvariablen zu bestimmen.

4. Diagnoseeinrichtung nach einem der vorhergehenden Ansprüche, **dadurch gekennzeichnet, dass** an Knoten der selbstorganisierenden Karte den Datensätzen entsprechende n-Tupel mit vorbestimmten Werten von Prozessvariablen für fehlerfreie Durchläufe der Schrittkette abgelegt sind und dass die Auswerteeinrichtung (16) weiterhin dazu ausgebildet ist, durch Auswertung des Datensatzes anhand der selbstorganisierenden Karte eine Abweichung des Anlagenverhaltens beim zu prüfenden Durchlauf der Schrittkette vom Verhalten bei fehlerfreien Durchläufen zu detektieren und anzuzeigen.

5. Diagnoseeinrichtung nach einem der vorhergehenden Ansprüche, **dadurch gekennzeichnet, dass** die Auswerteeinrichtung (16) dazu ausgebildet ist, zur Detektion einer Abweichung des Anlagenverhaltens den geringsten kartesischen Abstand zwischen dem Datensatz des zu überprüfenden Durchlaufs und den Knoten der selbstorganisierenden Karte zu bestimmen.

6. Diagnoseeinrichtung nach Anspruch 5, **dadurch gekennzeichnet, dass** die Auswerteeinrichtung (16) dazu ausgebildet ist, als Diagnoseaussage eine Abweichung vom Normalverhalten bei dem zu prüfenden Durchlauf der Schrittkette anzuzeigen, wenn der Abstand einen vorbestimmten Schwellwert übersteigt.

7. Diagnoseeinrichtung nach einem der vorhergehenden Ansprüche, **dadurch gekennzeichnet, dass** die Auswerteeinrichtung (16) dazu ausgebildet ist, zur Vorbestimmung der selbstorganisierenden Karte vor einem zu prüfenden Durchlauf im Datenspeicher (15) mehrere, einen fehlerfreien Betrieb der Anlage kennzeichnende Datensätze abzuspeichern und anhand dieser Datensätze durch ein Lernverfahren die n-Tupel mit den Werten von Prozessvariablen für fehlerfreie Durchläufe für die Knoten zu berechnen und an den Knoten der selbstorganisierenden Karte abzulegen.

8. Diagnoseeinrichtung nach Anspruch 7, **dadurch gekennzeichnet, dass** die Auswerteeinrichtung (16) dazu ausgebildet ist, weiterhin vor einem zu prüfenden Durchlauf im Datenspeicher (15) weitere, einen fehlerfreien Betrieb der Anlage (1) kennzeichnende Datensätze abzuspeichern, für die Datensätze jeweils einen Gewinnerknoten zu bestimmen, die jeweiligen maximalen Abstände der Datensätze zu den ihnen zugeordneten Gewinnerknoten zu berechnen und diese, jeweils erhöht um einen Zuschlag zur Vermeidung von Fehldiagnosen, als vorbestimmte, den Gewinnerknoten jeweils zugeordnete Schwellwerte abzuspeichern.

9. Diagnoseeinrichtung nach einem der vorhergehenden Ansprüche, **dadurch gekennzeichnet, dass** zumindest der Datenspeicher (15) und die Auswerteeinrichtung (16) durch Software auf einem Remote-Service-Rechner zur Ferndiagnose der Anlage (1) implementiert sind.

10. Diagnoseverfahren zur Überwachung des Betriebs einer technischen Anlage (1) mit den folgenden Schritten:
- Abspeichern zumindest eines den Betrieb der Anlage (1) kennzeichnenden Datensatzes mit Werten von Prozessvariablen in einem Datenspeicher (15),
- Bestimmen einer Diagnoseaussage über den Betrieb der Anlage (1) anhand des Datensatzes und zumindest einer vorbestimmten, so genannten selbstorganisierenden Karte,
- automatisches Bestimmen zumindest eines Teils der Prozessvariablen als für die Diagnose relevant durch Analyse eines Programms (17) zur Steuerung des Ablaufs beim Betrieb der Anlage mit wiederholt durchlaufenen Schrittketten,
- Zuordnen jeweils einer Koordinate des Datensatzes zu den zuvor als relevant für die Diagnose bestimmten Prozessvariablen, wobei der Datensatz als n-Tupel mit einer Anzahl n von Koordinaten ausgeführt ist, **dadurch gekennzeichnet, dass** die in Schritten der Schrittkette gesetzten Stellgrößen und/oder die Messgrößen, die in Schritten der Schrittkette zur Überprüfung einer Übergangsbedingung abgefragt werden, als für die Diagnose relevante Prozessvariablen bestimmt werden.

11. Computerprogramm mit durch einen Computer ausführbaren Programmcodeanweisungen zur Implementierung des Verfahrens nach Anspruch 10, wenn das Computerprogramm auf einem Computer ausgeführt wird.

12. Computerprogrammprodukt, insbesondere Datenträger oder Speichermedium mit einem durch einen Computer ausführbaren Computerprogramm gemäß Anspruch 11.

## Claims

1. Diagnostic device for monitoring the operation of a technical system (1), wherein the system (1) has an automation system (3), wherein the diagnostic device comprises a data storage unit (15), in which at least one data record which has values of process variables and which identifies the operation of the system (1) can be stored, and an evaluation device (16), by means of which on the basis of the data record and at least one predetermined, so-called self-organising map, a diagnostic statement about the operation of the system (1) can be determined and/or displayed, wherein, on the basis of a program (17) for controlling the sequence during operation of the system (1) with repeatedly run step sequences, the evaluation device (16) is embodied to automatically determine at least one part of the process variables as relevant to the diagnosis and to assign a coordinate of the data record to these in each case, wherein the data record is designed as an n-tuple with a number n of coordinates, **characterised in that** the evaluation device (16) is embodied to determine the controlled variables and/or measured variables set in steps in the step sequence, which are queried in steps in the step sequence in order to monitor a transition condition, as process variables which are relevant to the diagnosis.

2. Diagnostic device according to claim 1, **characterised in that** the evaluation device (16) is embodied to use a data record and a predetermined self-organising map to determine and/or display the diagnostic statement for steps in the step sequence in each case.

3. Diagnostic device according to claim 2, **characterised in that** the evaluation device (16) is embodied to automatically determine the controlled variables and/or the measured variables set in the respective step, which are queried in the respective step for monitoring a transition condition, as process variables which are relevant to the diagnosis in the respective step.

4. Diagnostic device according to one of the preceding claims, **characterised in that** n-tuples which correspond to the data records and have predetermined values of process variables for error-free cycles in the step sequence are stored on the node of the self-organising map and that the evaluation device (16) is further embodied, on the basis of the self-organising map, to detect and indicate a variance in the system behaviour during the cycle to be checked in the step sequence from the behaviour during error-free cycles.

5. Diagnostic device according to one of the preceding claims, **characterised in that** the evaluation device (16) is embodied to determine the smallest Cartesian distance between the data record of the cycle to be checked and the node of the self-organising map in order to detect a variance in the system behaviour.

6. Diagnostic device according to claim 5, **characterised in that** the evaluation device (16) is embodied to indicate, as a diagnostic statement, a variance from the normal behaviour in the case of the cycle to be checked in the step sequence if the distance exceeds a predetermined threshold value.

7. Diagnostic device according to one of the preceding claims, **characterised in that** the evaluation device (16) is embodied to store a number of data records identifying an error-free operation of the system in order to predetermine the self-organising map prior to a cycle to be checked in the data storage unit (15) and to calculate the n-tuples with the values of process variables for error-free cycles for the nodes on the basis of these data records by means of a learning method and to deposit the same on the nodes of the self-organising map.

8. Diagnostic device according to claim 7, **characterised in that** prior to a cycle to be checked the evaluation device (16) is embodied to store further data records identifying an error-free operation of the system (1) in the data storage unit (15), to determine a winner node for the data records in each case, to calculate the respective maximum distances of the data records from the winner nodes assigned thereto and to store these, in each case increased by a margin in order to avoid misdiagnoses, as predetermined threshold values assigned to the winner nodes in each case.

9. Diagnostic device according to one of the preceding claims, **characterised in that** at least the data storage unit (15) and the evaluation device (16) are implemented by software on a remote service computer for remote diagnosis of the system (1).

10. Diagnostic method for monitoring the operation of a technical system (1) with the following steps:
- Storing at least one data record which identifies the operation of the system (1) and has values of process variables in a data storage unit (15),
- Determining a diagnostic statement about the operation of the system (1) on the basis of the data record and at least one predetermined, so-called self-organising map,
- Automatically determining at least one part of the process variables as relevant to the diagnosis by analysing a program (17) for controlling the sequence during operation of the system with repeatedly run step sequences,
- Assigning in each case a coordinate of the data record to the process variables previously determined as relevant to the diagnosis, wherein the data record is designed as an n-tuple with a number n of coordinates, **characterised in that** the controlled variables and/or measured variables set in steps in the step sequence, which are queried in steps in the step sequence in order to monitor a transition condition, are determined as process variables which are relevant to the diagnosis.

11. Computer program with program code instructions which can be executed by a computer in order to implement the method according to claim 10, when the computer program is executed on a computer.

12. Computer program product, in particular data carrier or storage medium with a computer program according to claim 11 which can be executed by a computer.

## Revendications

1. Dispositif de diagnostic pour contrôler le fonctionnement d'une installation (1) technique, l'installation (1) ayant un système (3) d'automatisation, le dispositif de diagnostic comprenant une mémoire (13) de données, dans laquelle au moins un jeu de données, caractérisant le fonctionnement de l'installation par des valeurs de variables de processus, est mis en mémoire, et un dispositif (16) d'exploitation, par lequel, à l'aide du jeu de données et d'au moins un carte déterminée à l'avance dite d'auto-organisation, une prédiction de diagnostic sur le fonctionnement de l'installation peut être déterminée et/ou affichée, le dispositif (16) d'exploitation étant constitué pour, à l'aide d'un programme (17) de commande du déroulement, lors du fonctionnement de l'installation (1) par des séquences de stade se déroulant de manière répétée, déterminer automatiquement au moins une partie des variables de processus comme variables de processus pertinentes pour le diagnostic et associer à celles-ci respectivement une coordonnée du jeu de données, le jeu de données étant réalisé sous la forme d'un n-tuple ayant un nombre n de coordonnées, **caractérisé en ce que** le dispositif (16) d'exploitation est constitué pour déterminer, comme variables de processus pertinentes pour le diagnostic, des grandeurs de réglage fixées dans des stades de la séquence de stade et/ou les grandeurs de mesure, qui sont demandées dans des stades de la séquence de stade pour contrôler une condition de transition.

2. Dispositif de diagnostic suivant la revendication 1, **caractérisé en ce que** le dispositif (16) d'exploitation est constitué pour utiliser, pour la détermination et/ou l'affichage de la prédiction de diagnostic pour des stades de la séquence de stade, respectivement un jeu de données et une carte déterminée à l'avance d'auto-organisation.

3. Dispositif de diagnostic suivant la revendication 2, **caractérisé en ce que** le dispositif (16) d'exploitation est constitué pour déterminer automatiquement, comme variables de processus pertinentes pour le diagnostic dans le stade respectif, des grandeurs de réglage fixées dans le stade respectif et/ou les grandeurs de mesure, qui sont demandées dans le stade respectif, pour le contrôle d'une condition de transition.

4. Dispositif de diagnostic suivant l'une des revendications précédentes, **caractérisé en ce qu'**aux noeuds de la carte d'auto-organisation, des n-tuples, correspondant au jeu de données et ayant des valeurs déterminées à l'avance de variables de processus, sont mis pour des déroulements sans erreur de la séquence de stade et **en ce que** le dispositif (16) d'exploitation est constitué pour, en outre, par exploitation du jeu de données, à l'aide de la carte d'auto-organisation, détecter et afficher un écart du comportement de l'installation, lors du déroulement à contrôler de la séquence de stade, au comportement lors de déroulement sans erreur.

5. Dispositif de diagnostic suivant l'une des revendications précédentes, **caractérisé en ce que** le dispositif (16) d'exploitation est constitué pour déterminer, pour la détection d'un écart du comportement de l'installation, la distance cartésienne la plus petite entre le jeu de données du déroulement à contrôler et les noeuds de la carte d'auto-organisation.

6. Dispositif de diagnostic suivant la revendication 5, **caractérisé en ce que** le dispositif (16) d'exploitation est constitué pour indiquer, comme prédiction de diagnostic, un écart au comportement normal dans le déroulement à contrôler de la séquence de stade, si la distance dépasse une valeur de seuil déterminée à l'avance.

7. Dispositif de diagnostic suivant l'une des revendications précédentes, **caractérisé en ce que** le dispositif (16) d'exploitation est constitué pour mettre, dans la mémoire (15) de données, pour la détermination à l'avance de la carte d'auto-organisation avant le déroulement à contrôler, plusieurs jeux de données caractérisant un fonctionnement sans défaut de l'installation et pour calculer, à l'aide de ces jeux de données, par un procédé d'apprentissage, les n-tuples ayant les valeurs de variables de processus pour des déroulement sans défaut pour les noeuds et les mettre aux noeuds de la carte d'auto-organisation.

8. Dispositif de diagnostic suivant la revendication 7, **caractérisé en ce que** le dispositif (16) d'exploitation est constitué pour mettre, en outre, dans la mémoire (15) de données, avant un déroulement à contrôler, d'autres jeux de données caractérisant un fonctionnement sans défaut de l'installation (1) pour déterminer, pour les jeux de données respectivement un noeud gagnant, pour calculer les distances maximums respectives des jeux de données aux noeuds gagnants, qui leur sont associés, et pour mettre ceux-ci en mémoire, augmenter respectivement d'un supplément, pour empêcher de faux diagnostics, comme valeurs de seuil déterminées à l'avance associées respectivement aux noeuds gagnants.

9. Dispositif de diagnostic suivant l'une des revendications précédentes, **caractérisé en ce qu'**au moins la mémoire (15) de données et le dispositif (16) d'exploitation sont mis en oeuvre par logiciel dans un télé-ordinateur de service pour le télédiagnostic de l'installation (1).

10. Procédé de diagnostic pour contrôler le fonctionnement des installations (1) techniques, comprenant les stades suivants :
- mise d'au moins un jeu de données caractérisant le fonctionnement de l'installation (1) par des valeurs de variables de processus dans une mémoire (15) de données,
- détermination d'une prédiction de diagnostic sur le fonctionnement de l'installation (1) à l'aide du jeu de données et d'au moins une carte déterminée à l'avance dite d'auto-organisation,
- détermination automatique d'au moins une partie des variables de processus comme pertinentes pour le diagnostic par analyse d'un programme (17) de commande du déroulement lors du fonctionnement de l'installation avec des séquences de stade se déroulant de manière répétée,
- association respectivement d'une coordonnée du jeu de données aux variables de processus déterminées auparavant comme pertinentes pour le diagnostic, le jeu de données étant réalisé sous la forme d'un n-tuple ayant un nombre n de coordonnées, **caractérisé en ce que** l'on détermine comme variables pertinentes pour le diagnostic les grandeurs de réglage fixées dans des stades de la séquence de stade et/ou les grandeurs de mesure, qui sont demandées dans des stades de la séquence de stade, pour le contrôle d'une condition de transition.

11. Programme d'ordinateur ayant des instructions de code de programme pouvant être réalisé par un ordinateur pour la mise en oeuvre du procédé suivant la revendication 10, lorsque le programme d'ordinateur est réalisé sur l'ordinateur.

12. Produit de programme d'ordinateur, notamment support de données ou support de mémoire, ayant un programme d'ordinateur suivant la revendication 11 pouvant être réalisé par un ordinateur.
